Europäisches Patentamt

European Patent Office

Office européen des brevets

(11) Publication number: **0 306 112**
**B1**

(12) **EUROPEAN PATENT SPECIFICATION**

(45) Date of publication of patent specification: 23.01.91

(21) Application number: 88201884.9

(22) Date of filing: 02.09.88

(51) Int. Cl.⁵: **E 21 B 7/28, E 21 B 7/04,**
**E 02 F 5/10, H 02 G 1/06,**
**F 16 L 1/028**

(54) Process for laying a line in the ground.

(30) Priority: 04.09.87 BE 8700996

(43) Date of publication of application:
08.03.89 Bulletin 89/10

(45) Publication of the grant of the patent:
23.01.91 Bulletin 91/04

(84) Designated Contracting States:
DE FR GB NL

(56) References cited:
EP-A-0 209 217
DE-C- 954 052
GB-A-2 022 651
NL-A-7 902 758
US-A-1 808 974
US-A-2 085 756
US-A-2 903 252
US-A-3 967 689

(73) Proprietor: Smet, Nic Hilde Walter
Kasteelstraat 29
B-2400 Mol (BE)

(72) Inventor: Smet, Nic Hilde Walter
Kasteelstraat 29
B-2400 Mol (BE)

(74) Representative: Debrabandere, René et al
BUREAU DE RYCKER Vereenigde
Octrooibureaux Belgie N.V. Arenbergstraat 13
B-2000 Antwerpen (BE)

## Description

The invention relates to a process for laying a line in the ground, according to which a passage is made in the ground and the line is laid in said passage.

"Line" is meant in a wide sense here, so that it should be understood to include a cable, for example for electricity or telecommunications, a wasted pipe in which such a cable can be placed, or a pipe for fluid such as a gas line.

The process referred to above avoids the digging of a channel in the ground on the bottom of which the line is being laid. Digging a channel is a customary process for laying lines, but such a process is not only time-consuming and expensive, but is in many cases a great nuisance and is sometimes difficult or impossible to carry out, for example when the line has to cross a road.

Making a passage in the ground in which the line is then placed is, however, also fairly time-consuming, but gives rise to problems in particular as regards the correct direction of the passage.

A so-called "mole" is used for making the passage. If this machine is not guided, the correct direction of the line is difficult to achieve. Such a controllable machine is very expensive, and even in this case it is difficult to drill the passage straight and in the correct direction.

The object of the invention is to eliminate these disadvantages and produce a process for laying a line in the ground which is very simple and quick, and consequently cheap, and which in particular makes it possible to lay the line perfectly straight and in the desired direction.

For this purpose, before the passage is made, a wire is cut from above the ground through the ground to the place where the line is to go, and in the direction which said line is to take, it being ensured that the wire remains accessible at both ends of the passage to be formed, a device for making a hole in the ground is attached to the wire, at one end of the passage to be formed, and said wire is guided with said device, while said device is in operation, along the length of the wire through the ground by pulling away the wire at the other end of the passage to be formed.

Any control of the device in the ground is unnecessary, since said device is of necessity moved in the ground in the lengthwise direction of the wire.

The passage can be dug first, and the line can then be laid.

In a special embodiment of the invention the device for making a passage is fitted at one end of the line.

The line is then laid as the device is making the passage.

Through the contour of the ground itself, for example if the wire is cutting through an upstanding contour, the wire can be automatically accessible at one or both ends of the passage to be formed.

However, in many cases this is not so, and according to the process according to the invention, a hole is first dug in the ground at at least one of the ends of the passage to be formed.

Via this hole it is possible to pull the wire or attach the device for making a passage to the wire, and the line can also be placed in the passage formed or removed from said passage. Cutting through the ground by the wire can be carried out according to the usual methods, depending on the nature of the soil.

In sandy soil it can, for example, be carried out by vibrating the wire.

In rock the wire itself can constitute a cutting tool and can, for example, be clad with diamonds as for sawing rocks. The wire can be moved in the process, for example to and fro or continuously, in which case the wire can be an endless cable, the bottom part of which is placed in the ground, while the top part can remain above the ground.

Other special features and advantages of the invention will emerge from the description below of a process for laying a line in the ground according to the invention; this description is only given as an example, and does not limit the invention. The reference numbers refer to the appended drawings.

Figure 1 shows in schematic form a vertical section of a device mounted in the ground for laying a line in the ground while applying a first phase of the process according to the invention.

Figure 2 is aschematic representation similar to that of Figure 1, but relating to a second phase of laying the line according to the invention.

Figure 3 shows an equally schematic part of a cross section similar to that of Figure 2, so during the application of a second phase of the process according to the invention, but with reference to a different embodiment of this process.

Figure 4 shows in schematic form a vertical section of a different device installed in the ground for laying a line in the ground according to the invention, similar to that of Figure 1, but with reference to a different embodiment of the process according to the invention.

Figure 5 shows in schematic form a vertical section similar to that of Figure 4, but with reference to yet another embodiment of the process according to the invention.

Figure 6 shows in schematic form a section similar to that of Figures 1, 4 and 5, but with reference to yet another embodiment of the invention.

The same reference numbers relate to the same elements in the different figures.

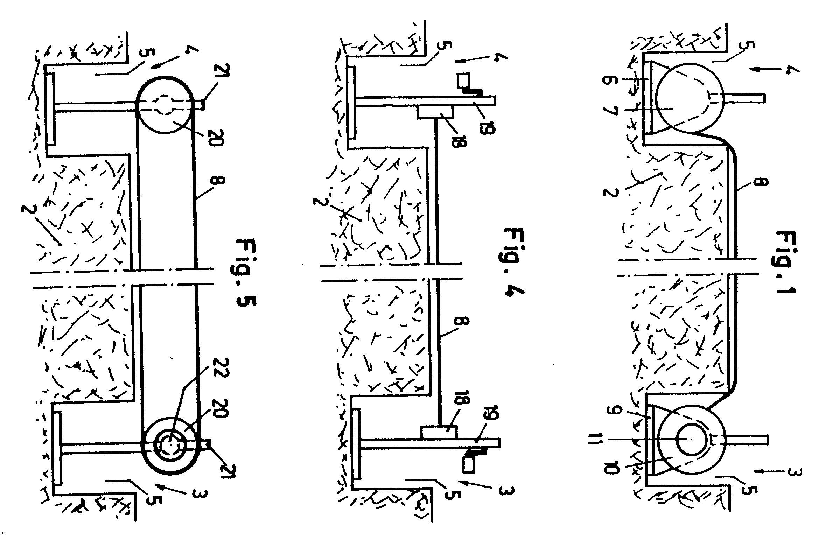

In order to lay a line 1 in the ground 2 between two points, indicated in Figure 1 by the reference numbers 3 and 4, a hole 5 is dug in the ground at each of the last-mentioned points.

A drum 7, mounted on a base 6 and on which a wire 8 is wound, is placed on the bottom of hole 5, at point 4.

A second drum 10, mounted on a base 9, is placed in the other hole 5 at point 3.

This second drum 10 is driven by a motor 11 mounted on the base 9.

The wire 8 is partially unwound from the drum 7 and is conveyed from the corresponding hole 5, over the surface of the ground 2 to the other hole, where the free end of this cable is attached to the second drum 10.

The wire 8 is cut into the ground 2 by driving the drum 10 and thus winding the cable onto said drum 10. The drum 7 can be braked if necessary.

The wire 8 is a so-called cutting cable. According to the type of ground 2, it can be an ordinary steel cable or a cable to which, for example, diamonds or other particles of cutting material are fixed.

In a variant the wire 8 can be moved to and fro, instead of always being moved in the same direction. In this case the drum 7 is also driven by a motor, so that the wire can be wound onto the drum 7, this motor and the motor 11 being put into operation successively.

When the wire 8 has penetrated into the ground to the maximum, it extends in a straight line from drum 7 to drum 10.

The wire 8 can here be directed either horizontally or at an angle. Its direction depends on the depth of the drums 7 and 10 in the corresponding holes 5. This direction may be settable if the depth of one of the drums or both drums 7 or 10 is settable, for example through the drum being mounted in vertically adjustable fashion on the corresponding base 6 or 9.

When the wire 8 has reached its maximum depth, it is detached from one of the drums 7 or 10 and said drum is removed.

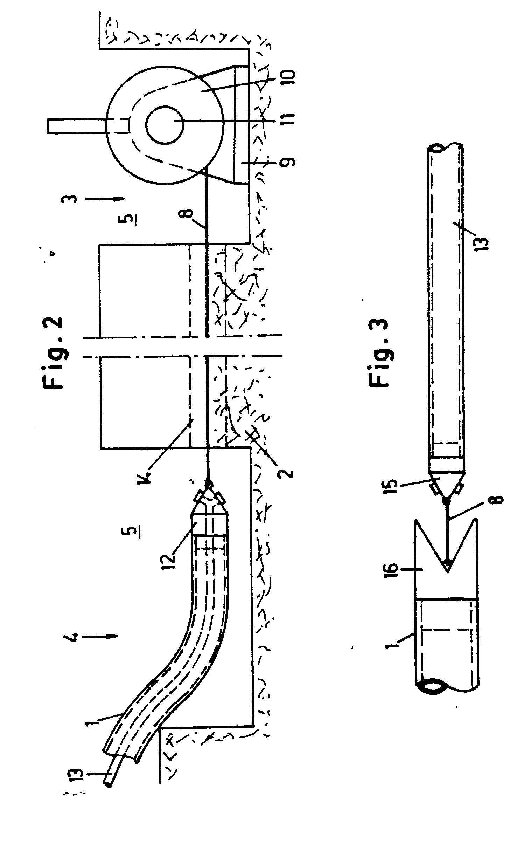

As shown in Figure 2, the wire 8 was, for example, detached from the drum 7, and the drum 7 was removed from the first hole 5.

A hydraulic drill head 12 is now attached to the thus released end of the cable 8.

This drill head 12 can be of a known design and is not described in detail here. It contains not necessarily rotary parts but it does have one or more necessary forward-facing high-pressure spray elements connected to a high-pressure line 13.

The drill head 12 is attached to the free end of the line 1 to be laid. This line 1 can be either a cable or a pipe, which can be either the line ultimately to be laid or an auxiliary line through which the actual line or a cable is subsequently laid.

If this line is a hollow, slightly supple pipe, the high-pressure line extends through this hollow pipe.

The wire 8 is now wound onto the drum 10, while water is pumped under pressure through the high-pressure line 13 to the drill head 12.

The drill head 12 loosens up the ground to form a passage 14 in the ground. The drill head 12 is thereby pulled by the wire 8 in the lengthwise direction of the latter.

The direction in which the drill head 12 moves, and thus the direction of the passage, is therefore determined by the lengthwise direction of the wire 8 and is perfectly straight.

The wire 8 is also responsible for moving the drill head 12, but the passage is formed by the pressure of the water which is sprayed through the drill head 12 and discharged round the drill head 12 backwards into the passage 14 and one of the holes 5. This water can be pumped out of the hole 5.

It is possible for the drill head 12 to move forwards by itself, for example by having spray heads which are directed backwards. In this case the wire 8 serves only to direct the drill head in the ground.

When the drill head 12 has reached the hole 5 in which the drum 10 is located, it is detached from the line 1, which is then laid in the desired place in the ground 2.

In some cases it is, however, not possible or not desirable to lay the high-pressure line 13 through the line 1. This is the case, for example, when the line 1 is a cable for telecommunications or electricity. The high-pressure line 13 can then extend alongside the line 1, or surround the wire 8, or it can be placed opposite the line 1, as in the embodiment to which Figure 3 relates.

In the last-mentioned embodiment the high-pressure line 13 is laid in the same way as the line 1. A high-pressure spray head 15 is mounted on the end of the high-pressure line 13, and this high-pressure spray head 15 is attached to one end of the wire 8 which is detached from one of the drums 7 or 10. The spray head 15 is pulled, while water is sprayed at high pressure, through the ground by means of the wire 8 which is wound onto the other drum 10 or 7.

The line laid is thus at the same time the high-pressure line along which fluid is supplied under pressure to the spray head 15.

Once the high-pressure line 13 is laid in the ground, with the spray head 15 in one of the holes 5, a deflector part 16 is fixed to the spray head 15 by means of the wire 8 or a part thereof, or a separate cable, said deflector part 16 having a larger diameter than the spray head 15 and being fitted at the end of the line 1 to be laid, as shown in Figure 3.

The whole device for making a hole, formed by the spray head 15 and the deflector part 16, and consequently also the line 1, is now pulled through the ground 2, forming a passage 14 of larger diameter than the passage formed by the high-pressure line 13, by winding said high-pressure line 13 back onto a drum in the same way as the wire 8 in the above-described stage.

The liquid sprayed through the spray head 15 is deflected by the deflectors as shown by the arrows 17 in Figure 3, to form the larger passage.

The line 13 is then in this case used as a wire to pull the device for making a hole through the ground, and in particular to direct it.

The high-pressure line with the spray head 15 could, if desired, be fitted on the wire in such a way that said wire extends through the high-pressure line, so that the cable can also be used for pulling.

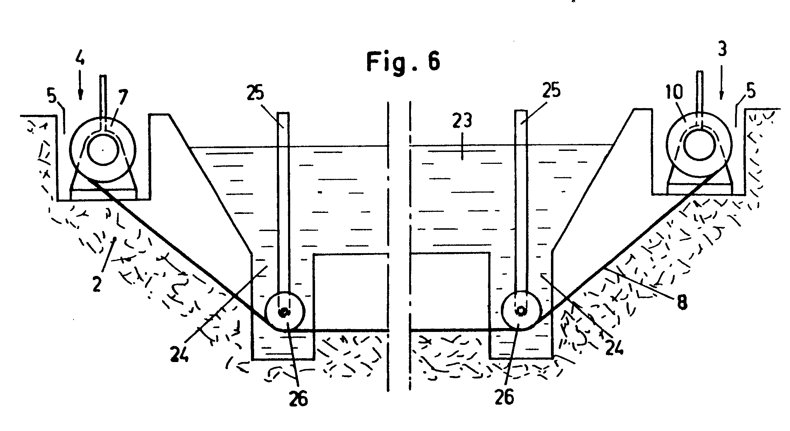

The embodiments of the process to which Figures 4 and 5 relate differ from the processes described above only in that there is a different method for laying the cutting wire formed by the wire 8 in the ground 2.

In the process to which Figure 4 relates, this wire 8 is not fastened by both ends to a drum, but to a vibrating unit 18.

The two vibrating units 18 are mounted in vertically adjustable fashion on a support 19.

Said supports 19 are placed in the two holes 5 with the vibrating units 18 on top, so that the wire 8 hangs above the ground.

While said wire 8 is caused to vibrate by the vibrating units 18, the vibrating units 18 with the wire 8 are lowered into the hole, either manually or by means of a motor, until the wire 8 is at the desired depth and gradient.

The two ends of the wire 8 are then detached and the vibrating units 18 with the supports 19 are removed. One end of the wire 8 is then fastened to a device for making a hole in the ground, such as a drill head 12, and the cable is pulled by the other end along its lengthwise direction through the ground 2.

This pulling of the cable can take place by means of a drum which is fitted, for example, in the corresponding hole 5.

This embodiment is particularly useful for sandy soil.

In the embodiment of the process to which Figure 5 relates the wire which cuts through the ground 2 is formed by the bottom part of an endless wire 8 which is fitted over two drums 20, each vertically adjustable on a support 21.

One of the drums 20 is driven by a motor 22.

The two supports 21 are placed on the bottom of the two holes 5, with the drums 20 on top, so that the endless wire 8 is lying completely above the ground 2.

While one of the drums 20 is driven by means of the motor 22, the two drums 20 are lowered, either by hand or by means of a motor, on their supports 21 until the bottom part of the endless wire 8 has reached the desired depth and direction.

The endless wire 8 is then interrupted in one of the holes 5 and the drum 20 with its support 21 being in this hole are removed. The device for making a hole in the ground, for example a drill head 12 mounted on the front end of the line 1, is then fastened in the way described above to the thus released end of the bottom part of the now interrpted endless wire 8. The process is continued as for the first described embodiment of the process.

Finally, Figure 6 relates to a variant of the embodiment of the process according to the invention to which Figures 1 and 2 relate, but the wire 8 which is placed in the ground 2 is not placed in a straight line in said ground, but in a U shape, for example for laying a line 1 in the bed of a river.

The ends of the cable 8 are wound on two drums 7 and 10 which are placed in holes 5 or on the two banks of the river.

Holes 24 in which guide posts 25 are placed are made at the deep points of the river 23. Vertically adjustable guide rollers 26 are fitted on these posts.

The wire 8 is guided over these guide rollers 26 from the bottom.

While the wire 8 is being moved to and fro, the guide rollers 26 are moved down in the holes, so' that the complete cable cuts into the ground 22 at the desired gradient in the ground.

Figure 6 shows this wire 8 after it has reached its end position.

One end of the cable 8 is also detached and fastened to a drill head 12, as in the case of the first-described embodiment of the process. The wire 8 is then wound onto the remaining drum, while water under pressure is sprayed via the drill head 12, so that said drill head forms a passage whose course corresponds entirely to the course which the wire 8 had in the ground. The guide rollers 26 are used to guide the line 1 during the laying of said line 1 and are removed with the posts 25 only after the laying of the line 1.

In all these embodiments the line can be directed perfectly.

The passage is made very quickly.

Although it is possible to lay the line after the formation of the passage, the line can be attached directly to the device for making the passage, as in the case of the embodiments described above, so that the line is laid at the same time as the passage is being formed, therefore making the process very fast.

Only a small crack which was formed by the wire 8 is left on the surface of the ground. The damage to the ground surface is therefore minimal, and the laying of the line causes the minimum of inconvenience.

If the line has to cross, for example, a traffic route, this route need be interrupted for only a brief moment to introduce the wire 8. The road can be used during the actual drilling of the passage and the laying of the line. The damage to the road surface is minimal, and repair is not even always necessary.

The invention is by no means limited to the embodiments described above, and many modifications can be made onto the described embodiments within the scope of the patent application, inter alia as regards the form, the composition, the arrangement and the number of parts used for achieving the invention.

In particular, instead of a drill head on a device consisting of a spray head and a deflector part, a different device for making a hole can be attached to the wire, for example a pneumatic or hydraulic chamber.

**Claims**

1. Process for laying a line (1) in the ground (2), according to which a passage (14) is made in the ground and the line (1) is laid in this passage (14), characterized in that before the passage (14) is made, a wire (8) is cut from above the ground (2) through the ground (2) to the place where the line (1) is to go and in the direction which said line (1) is to take, it being ensured that the wire (8) remains accessible at both ends of the passage (14) to be formed, a device (12 or 15, 16) for making a passage (14) in the ground (2) is attached to the wire (8), at one end of the passage to be formed, and said wire (8) is guided with said device (12 or 15, 16), while said device (12 or 15, 16) is in operation, along the length of the wire (8) through the ground (2) by pulling away the wire (8) at the other end of the passage to be formed.

2. Process according to claim 1, characterized in that the passage (14) is made first and the line (1) is subsequently introduced into it.

3. Process according to claim 1, characterized in that the device (12 or 15, 16) for making a passage (14) in the ground (2) is fitted on one end of the line (1).

4. Process according to any one of the preceding claims, characterized in that a hole (5 or 24) is first dug in the ground at at least one of the ends of the passage (14) to be formed.

5. Process according to any one of claims 1 to 4, characterized in that the device used to make a passage (14) is a drill head (12) which is connected to a high-pressure line (13) and fluid is sprayed under pressure through said line (13) and the drill head (12).

6. Process according to claim 5, characterized in that the high-pressure line (12) is fitted through the line (1) to be fitted.

7. Process according to claim 5, characterized in that the high-pressure line used is the line (1) itself.

8. Process according to any one of claims 1 to 7, characterized in that an auxiliary line (13) is used as the line laid in the ground (2) first, once this line (13) is laid through the passage (14) in the ground (2) it is fixed to a thicker line (1) at the end of this high-pressure line on which the device (15, 16) for making a hole in the ground (2) is mounted, and finally the first said high-pressure line (3) is drawn out of the passage (14), while the diameter of the passage (14) formed is increased by means of the above-mentioned or another device (15, 16) and the thicker line (1) is pulled through it.

9. Process according to claim 8, characterized in that a high-pressure spray head (15) is fixed to the above-mentioned end of the high-pressure line, while a deflector part (16) is fixed to the end of the thicker line (1) connected thereto.

10. Process according to any one of claims 1 to 9, characterized in that the wire (8) is cut into the ground (2) by vibrating it.

11. Process according to any one of claims 1 to 9, characterized in that a wire (8) is used which forms a cutting tool and is taken into the ground (2) by moving it.

12. Process according to claim 11, characterized in that the wire (8) is wound onto and off a drum (7, 10) by its ends.

13. Process according to any one of claims 1 to 11, characterized in that an endless wire (8) is used and said wire (8) is pushed into the ground by moving said endless wire over two drums (20).

**Patentansprüche**

1. Ein Verfahren zum Verlegen einer Leitung (1) im Boden (2), gemäß welchem man einen Durchgang (14) im Boden macht und die Leitung (1) in diesen Durchgang (14) legt, gekennzeichnet dadurch, daß man, bevor der Durchgang (14) gemacht wird, einen Draht (8) von über dem Boden (2) durch den Boden (2) bis zu der Stelle vortreibt, wo die Leitung (1) hinführen soll und in der Richtung, die die erwähnte Leitung (1) nehmen soll, wobei sichergestellt wird, daß der Draht (8) an beiden Enden des zu bildenden Durchgangs (14) zugänglich bleibt, daß an einem Ende des zu bildenden Durchgangs ein Gerät (12 oder 15, 16) zum Anlegen eines Durchgangs (14) im Boden (2) an dem Draht (8) befestigt wird, wobei dieser Draht (8) mit dem erwähnten Gerät (12 oder 15, 16), während dieses Gerät (12 oder 15, 16) in Betrieb ist, entlang der Länge des Drahtes (8) durch den Boden (2) geführt wird, indem man den Draht (8) am anderen Ende des zu bildenden Durchgangs wegzieht.

2. Das Verfahren gemäß Anspruch 1, gekennzeichnet dadurch, daß zuerst der Durchgang (14) gemacht wird und anschließend die Leitung (1) darin eingeführt wird.

3. Das Verfahren gemäß Anspruch 1, gekennzeichnet dadurch, daß das Gerät (12 oder 15, 16) zum Anlegen eines Durchgangs (14) im Boden (2) an einem Ende der Leitung (1) befestigt wird.

4. Das Verfahren gemäß einem der vorgenannten Ansprüche, gekennzeichnet dadurch, daß zumindest an einem der Enden des zu bildenden Durchgangs (14) ein Loch (5 oder 24) in den Boden gegraben wird.

5. Das Verfahren gemäß einem der Ansprüche 1 bis 4, gekennzeichnet dadurch, daß das zum Anlegen eines Durchgangs (14) verwendete Gerät ein an eine Hochdruckleitung (13) angeschlossener Bohrkopf (12) ist und daß Flüssigkeit unter Druck durch die erwähnte Leitung (13) und den Bohrkopf (12) gesprüht wird.

6. Das Verfahren gemäß Anspruch 5, gekennzeichnet dadurch, daß die Hochdruckleitung (12) durch die zu legende Leitung (1) angebracht wird.

7. Das Verfahren gemäß Anspruch 5, gekennzeichnet dadurch, daß die verwendete Hochdruckleitung die Leitung (1) selbst ist.

8. Das Verfahren gemäß einem der Ansprüche 1 bis 7, gekennzeichnet dadurch, daß eine Hilfsleitung (13) als die zuerst im Boden (2) verlegte Leitung verwendet wird, diese Leitung (13), sobald sie durch den Durchgang (14) im Boden (2) gelegt ist an einer dickeren Leitung (1) am Ende dieser Hochdruckleitung befestigt wird, an der das Gerät (15, 16) zum Machen eine Lochs im Boden (2) angebracht ist, und schließlich die erste erwähnte Hochdruckleitung (3) aus dem Durchgang (14) herausgezogen wird, während der Durchmesser des entstandenen Durchgangs (14) mit Hilfe des vorgenannten oder eines anderen Gerätes (15, 16) erweitert und die dickere Leitung (1) hindurchgezogen wird.

9. Das Verfahren gemäß Anspruch 8, gekennzeichnet dadurch, daß ein Hochdruck-Bohrkopf (15) an dem oben erwähnten Ende der Hochdruckleitung befestigt wird, während am Ende der daran befestigten dickeren Leitung (1) ein Ablenkteil (16) befestigt wird.

10. Das Verfahren gemäß einem der Ansprüche 1 bis 9, gekennzeichnet dadurch, daß der Draht (8) Draht durch vibrierende Bewegung in den Boden (2) getrieben wird.

11. Das Verfahren gemäß einem der Ansprüche 1 bis 9, gekennzeichnet dadurch, daß ein Draht (8) verwendet wird, der ein Schneidwerkzeug bildet und der durch Bewegen in den Boden (2) getrieben wird.

12. Das Verfahren gemäß Anspruch 11, gekennzeichnet dadurch, daß der Draht (8) an seinen Enden von einer Trommel (7, 10) auf und abgewickelt wird.

13. Das Verfahren gemäß einem der Ansprüche 1 bis 11, gekennzeichnet dadurch, daß ein Endlosdraht (8) verwendet wird und der erwähnten Draht (8) durch Bewegen des erwähnten Endlosdrahtes über zwei Trommeln (20) in den Boden getrieben wird.

**Revendications**

1. Procédé destiné à poser une canalisation (1) dans le sol (2), selon lequel on réalise un passage (14) dans le sol et on pose la canalisation (1) au sein de ce passage (14), caractérisé en ce qu'avant de réaliser le passage (14), on fait passer un fil métallique (8) à travers le sol (2), qui tranche ce dernier depuis la surface de ce dernier jusqu'à l'endroit où doit venir se placer la canalisation (1) et dans la direction que doit prendre cette canalisation (1), tout en s'assurant du fait que le fil métallique demeure accessible aux deux extrémités du passage (14) à réaliser; au fil métallique (8), on fixe un dispositif (12 ou 15, 16) destiné à réaliser un passage (14) dans le sol (2), à une extrémité du passage à réaliser, et on guide le fil métallique (8) à l'aide de ce dispositif (12 ou 15, 16), lors de la mise en service de ce dernier, sur la longueur du fil métallique (8), à travers le sol (2), en tirant le fil métallique (8) à l'autre extrémité du passage à réaliser.

2. Procédé selon la revendication 1, caractérisé en ce qu'on réalise d'abord le passage (14) et on y introduit, ensuite, la canalisation (1).

3. Procédé selon la revendication 1, caractérisé en ce qu'on fixe le dispositif (12 ou 15, 16) destiné à réaliser un passage (14) dans le sol (2), à une extrémité de la canalisation (1).

4. Procédé selon l'une quelconque des revendications précédentes, caractérisé en ce que l'on creuse un trou (5 ou 24) dans le sol à au moins une des extrémités du passage (14) à réaliser.

5. Procédé selon l'une quelconque des revendications 1 à 4, caractérisé en ce que le dispositif utilisé pour réaliser un passage (14) est une tête de forage (12) raccordée à une canalisation (13) à haute pression et on pulvérise un fluide sous pression à travers cette canalisation (13) et la tête de forage (12).

6. Procédé selon la revendication 5, caractérisé en ce qu'on fait passer la canalisation (13) à haute pression à travers la canalisation (1) à mettre en place.

7. Procédé selon la revendication 5, caractérisé en ce que la canalisation à haute pression utilisée est la canalisation (1) elle-même.

8. Procédé selon l'une quelconque des revendications 1 à 7, caractérisé en ce qu'on utilise une canalisation auxiliaire (13) que l'on pose d'abord dans le sol (2) de la même manière que la canalisation (1); une fois cette canalisation (13) posée à travers le passage (14) pratiqué dans le sol (2), on la fixe à une canalisation plus épaisse (1) à l'extrémité de cette canalisation à haute pression sur laquelle est monté le dispositif (15, 16) destiné à pratiquer un trou dans le sol (2); enfin, on tire hors du passage (14), la canalisation (13) à haute pression mentionnée en premier lieu, tandis qu'on augmente le diamètre du passage (14) réalisé au moyen du dispositif susmentionné ou d'un autre dispositif (15, 16) et on tire la canalisation plus épaisse (1) à travers ce passage.

9. Procédé selon la revendication 8, caractérisé en ce qu'on fixe une tête de pulvérisation (15) à haute pression à l'extrémité susmentionnée de la canalisation à haute pression, tandis qu'on fixe un élément déflecteur (16) à l'extrémité de la canalisation plus épaisse (1) qui y est raccordée.

10. Procédé selon l'un quelconque des revendications 1 à 9, caractérisé en ce qu'on fait en sorte que le fil métallique (8) tranche le sol (2), en le faisant vibrer.

11. Procédé selon l'un quelconque des revendications 1 à 9, caractérisé en ce qu'on utilise un fil métallique (8) qui constitue un outil coupant et en ce qu'on le fait pénétrer dans le sol (2) en lui imprimant un mouvement.

12. Procédé selon la revendication 11, caractérisé en ce qu-on enroule et on déroule le fil métallique (8) sur ou hors d'un tambour (7, 10), par l'intermédiaire de ses extrémités.

13. Procédé selon l'un quelconque des revendications 1 à 11, caractérisé en ce qu'on utilise un fil métallique (8) sans fin et en ce qu'on fait pénétrer le fil métallique (8) dans le sol en faisant passer ce fil métallique sans fin par-dessus deux tambours (20).

### Fig. 1

### Fig. 4

### Fig. 5

1

**Fig. 2**

**Fig. 3**

Fig. 6